(19) Europäisches Patentamt
European Patent Office
Office européen des brevets

(11) **EP 3 680 962 A1**

(12) **EUROPEAN PATENT APPLICATION**

(43) Date of publication:
**15.07.2020 Bulletin 2020/29**

(21) Application number: **19151029.6**

(22) Date of filing: **09.01.2019**

(51) Int Cl.:
*H01M 4/13* (2010.01)    *H01M 4/139* (2010.01)
*H01M 4/62* (2006.01)    *H01M 4/36* (2006.01)
*H01M 4/134* (2010.01)    *H01M 4/1395* (2010.01)
*H01M 4/02* (2006.01)    *H01M 10/052* (2010.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **The Provost, Fellows, Scholars and other Members of Board of Trinity College Dublin Dublin 2 (IE)**

(72) Inventors:
• NICOLOSI, Valeria
  Dublin 2 (IE)
• PARK, Sang Hoon
  Donabate, Co. Dublin (IE)
• ZHANG, Chuanfang
  Dublin 2 (IE)

(74) Representative: **Purdylucey Intellectual Property 6-7 Harcourt Terrace D02 FH73 Dublin 2 (IE)**

(54) **HIGH CAPACITY ELECTRODES ENABLED BY 2D MATERIALS IN A VISCOUS AQUEOUS INK**

(57) A composite for use as an electrode, the composition comprising a homogenously distributed and spontaneously formed segregated network of nanosheets of conducting materials, or a combination thereof, and a particulate active material, in which no additional polymeric binder or conductive-additive are required.

Figure 1

**Description**

**Field of the Invention**

The invention relates to electrodes and, high areal capacity anodes, and the methods of making the same.

**Background to the Invention**

Utilization of Li-ion chemistry to store energy electrochemically can address the ever-increasing demands from both portable electronics and hybrid electrical vehicles. Such stringent challenges on the battery safety and lifetime issues require high-performance battery components, with most of the focus being on electrodes and electrolytes with novel nanostructures and chemistries. However, equally important is the development of electrode additives, which are required to maintain the electrode's conductive network and mechanical integrity.

Traditionally, electrode additives are made of dual-components based on a conductive agent (*i.e.* carbon black, CB) and a polymeric binder. While the former ensures the charge transport throughout the electrode, the latter mechanically holds the active materials and CB together during cycling. Although these traditional electrode additives have been widely applied in Li-ion battery technologies, they fail to perform well in high-capacity electrodes, especially those displaying large volume changes. This is because the polymeric binder is not mechanically robust enough to withstand the stress induced during lithiation/delithiation, leading to severe disruption of the conducting networks. This results in rapid capacity fade and poor lifetime.

This issue can be solved by employing a conductive binder to accommodate the large volume change of the electrodes. This strategy not only ensures good mechanical adhesion of the active materials to the conductive agent, but also decreases the inactive volume/mass of the electrode, leading to improved battery performance. Poly(3,4-ethylenedioxythiophene): poly(styrenesulfonic acid) (PEDOT:PSS), polyaniline (PANi) and polypyrrole (PPy) *etc.,* have demonstrated inherent electronic/ionic conductivity in the $Li^+$-containing electrolyte and capability in preserving the mechanical integrity of large-capacity materials, such as silicon (Si, $C_{SP}$=~3500 mAh/g) anodes. However, while several novel conductive binders have been reported for Si-based anodes, their achievable areal capacityis generally low (<4 mAh/cm$^2$). The electrode areal capacity C/A is calculated as ($^C/_A$=$^C/_M$×$^M/_A$, where C/M is the specific capacity (mAh/g) of the electrode and M/A is its mass loading (mg/cm$^2$)) implies that for maximum electrode areal capacity, one has to increase the M/A of the Si-based anodes (while retaining high specific capacity). This, in turn, requires the formation of a thick electrode using a commercially-available technology to cast the conductive-binder/Si-based slurry. Unfortunately, this has proven to be quite difficult, as the critical cracking thickness (CCT), determined by the viscosity and surface tension of the slurry, *etc.,* greatly limits the electrodes' achievable M/A. This is especially true in the reported conductive polymer solutions, where either concentration (or viscosity) of the solution is fairly low and/or the capillary pressure in the slurry drying process is too high. This means that developing an aqueous solution of a conductive-binder with a high concentration (and thus, high viscosity), and achieving high M/A (or C/A) Si-based anodes, are quite important and urgent.

It is an object of the present invention to overcome at least one of the above-mentioned problems.

**Summary of the Invention**

In brief, two dimensional conductive materials such as MXene nanosheets, transition metal dichalcogenides (TMDs), transition metal oxides or graphene, or a combination thereof, can be used as a new class of conductive binder to fabricate high-M/A Si/two-dimensional conductive materials (MXene, graphene, transition metal dichalcogenides (TMDs), transition metal oxides, or a combination thereof) electrodes without any additional polymer or CB. MXenes are an emerging class of two-dimensional materials produced by selectively etching the A-group element (typically Al or Ga) from the parent MAX phase. The as-obtained MXene can be expressed in a general formula $M_{n+1}X_nT_x$, where M represents an early transition metal, X is C and/or N, $T_x$ stands for various surface functionalities such as -OH, -O, and/or -F, and *n* = 1, 2, or 3. The excellent mechanical properties of the nanosheets facilitate the formation of thick electrodes while their high conductivity yields a conducting network which can efficiently distribute charge. The inventors demonstrate the invention by using two types of MXene inks, titanium carbide ($Ti_3C_2T_x$) and carbonitride ($Ti_3CNT_x$) as the conductive binder for producing high C/A nanoscale Si/MXene electrodes. Additionally, they also show graphene-wrapped Si particles embedded in the $Ti_3C_2T_x$ network enable much higher M/A with C/A compared to other Si/conductive binder systems. Other materials, such as transition metal dichalcogenides (TMDs) (for example, Molybdenum disulphide ($MoS_2$), Niobium diselenide ($NbSe_2$), Vanadium telluride ($VTe_2$), Tungsten disulphide ($WS_2$), Tantalum disulphide ($TaS_2$) and Platinum telluride ($PtTe_2$)), transition metal oxides (for example, Manganese dioxide ($MnO_2$)) and other layered compounds such as Antimony telluride ($Sb_2Te_3$) and Bismuth telluride ($Bi_2Te_3$), can be used in place of or in combination with graphene and MXene. When the TMD has the formula MXn, M may be selected from the group comprising Ti, Zr, Hf, V, Nb, Ta, Cr, Mn, Mo, W, Tc, Re, Ni, Pd, Pt, Fe and Ru; X may be selected from the group comprising O, S, Se, and Te; and $1 \leq n \leq 3$.

The use of a spontaneously formed segregated network of nanosheets of conducting 2D materials such as graphene, transition metal dichalcogenides (TMDs), transition metal oxides or MXenes (or combinations thereof) increases the maximum thickness of electrodes. This, in turn, allows for the increase of areal capacitance and therefore, improves energy storage device capacity. The spontaneously formed segregated composite network of 2D nanosheets of conducting (or semi-conducting) materials increases the mechanical properties of the electrode dramatically, supressing the mechanical instabilities by toughening the composite, and allowing the fabrication of electrodes with thicknesses of between 450-600 $\mu$m and up to 1000$\mu$m, where the electrodes comprise the stacking of two or more layers of the segregated network of nanosheets of 2D materials. Additionally, this spontaneously formed segregated composite network of 2D nanosheets of conductive material provides very high conductivity, allowing fast charge distribution within the electrodes and enabling very high, record areal capacities of up to 25 mAh/cm$^2$ for anode and cathode electrodes.

According to the present invention there is provided, as set out in the appended claims, in one aspect, a composite for use as an electrode, the composite comprising a homogenously distributed and spontaneously formed segregated network of nanosheets of conducting materials, or a combination of nanosheets of conducting materials, and a particulate active material, in which no additional polymeric binder or conductive-additive are required.

In one aspect, the composite comprises from 5 wt% to 50 wt% of the homogenously distributed spontaneously formed segregated network of nanosheets of conducting materials, or a combination thereof.

In one aspect, the uniformly distributed spontaneously formed segregated network of nanosheets of conducting materials are dispersed in either an organic solvent alone or water stabilised with 0.2 wt% to 10 wt% surfactant. Preferably, the surfactant is selected from sodium dodecyl sulfate (SDS), Sodium Dodecyl Benzene Sulphonate (SDBS), octyl-phenol-ethoxylate. Preferably, the solvent is selected from the group comprising n-methyl pyrrolidone (NMP), cyclohexylpyrrolidone, di-methyl formamide, Cyclopentanone (CPO), Cyclohexanone, N-formyl piperidine (NFP), Vinyl pyrrolidone (NVP), 1,3-Dimethyl-2-imidazolidinone (DMEU), Bromobenzene, Benzonitrile, N-methyl-pyrrolidone (NMP), Benzyl Benzoate, N,N'-Dimethylpropylene urea, (DMPU), gamma-Butrylactone (GBL), Dimethylformamide (DMF), N-ethyl-pyrrolidone (NEP), Dimethylacetamide (DMA), Cyclohexylpyrrolidone (CHP), DMSO, Dibenzyl ether, Chloroform, Isopropylalcohol (IPA), Cholobenzene, 1-Octyl-2-pyrrolidone (N8P), 1-3 dioxolane, Ethyl acetate, Quinoline, Benzaldehyde, Ethanolamine, Diethyl phthalate, N-Dodecyl-2-pyrrolidone (N12P), Pyridine, Dimethyl phthalate, Formamide, Vinyl acetate, Acetone *etc.*

In one aspect, the nanosheets of conducting material are selected from graphene, TMDs, transmission metal oxides, MXenes having a general formula of $M_{n+1}X_nT_x$, where T is an (optional) functional group, other layered compounds such as Antimony telluride ($Sb_2Te_3$) and Bismuth telluride ($Bi_2Te_3$), or a combination thereof. Preferably, the MXenes are selected from $Ti_2C$, $(Ti_{0.5},Nb_{0.5})_2C$, $V_2C$, $Nb_2C$, $Mo_2C$, $Ti_3C_2$, $Ti_3CN$, $Zr_3C_2$, $Hf_3C_2$; $Ti_4N_3$, $Nb_4C_3$ , $Ta_4C_3$; Mo2TiC2, $Cr_2TiC_2$; and $Mo_2Ti_2C_3$. Preferably, the TMD has the formula MXn, M may be selected from the group comprising Ti, Zr, Hf, V, Nb, Ta, Cr, Mn, Mo, W, Tc, Re, Ni, Pd, Pt, Fe and Ru; X may be selected from the group comprising O, S, Se, and Te; and $1 \leq n \leq 3$. Ideally, the TMDs are selected from Molybdenum disulphide ($MoS_2$), Niobium diselenide ($NbSe_2$), Vanadium telluride ($VTe_2$), Tungsten disulphide ($WS_2$), Tantalum disulphide ($TaS_2$) and Platinum telluride ($PtTe_2$).

In one aspect, the particulate active material is selected from micron-sized silicon powder, lithium, sulphur, graphene, graphite, and lithium nickel manganese cobalt oxide (NMC, $LiNi_xMn_yCo_zO_2$ where x+y+z = 1), lithium cobalt oxide (LCO), lithium nickel cobalt aluminium oxide (NCA), lithium iron phosphate (LFP), lithium titanium oxide (LTO) alloying materials (Si, Ge, Sn, P *etc.*), chalcogenides (S, Se, Te), metal halides (F, Cl, Br, I), and any other suitable battery material. Preferably, the particulate active material is Lithium Nickel Manganese Cobalt Oxide (NMC). Ideally, the NMC is $LiNi_{0.8}Mn_{0.1}Co_{0.1}O_2$ or $LiNi_{0.5}Mn_{0.3}Co_{0.2}O_2$.

In one aspect, the composite comprises from 50 wt% to 95 wt% of the particulate active material.

In one aspect, the composite described above is for use as an electrode in an energy storage device such as a battery, a supercapacitor, an electrocatalyst, or a fuel cell.

In one aspect, there is provided a positive electrode comprising the composite described above. Preferably, the positive electrode has a composition wherein the nanosheets of conducting materials (such as graphene, transition metal dichalcogenides (TMDs), transition metal oxides or MXene, or a combination thereof), have a mass fraction (Mf) in the electrode of 5 - 50 wt%. Preferably, the nanosheets of conducting materials (such as graphene, transition metal dichalcogenides (TMDs), transition metal oxides or MXene, or a combination thereof), have a mass fraction (Mf) in the electrode of 10 - 40 wt%.

In one aspect, the positive electrode has a composition wherein nanosheets of conducting materials (such as graphene, transition metal dichalcogenides (TMDs), transition metal oxides or MXene, or a combination thereof) have a mass fraction (Mf) in the electrode of 20 - 30 wt%.

In one aspect, the positive electrode has a thickness of between 200$\mu$m to 1000$\mu$m, or ideally from between 400$\mu$m to 1000$\mu$m. That is, a thickness selected from 200$\mu$m, 250$\mu$m, 275$\mu$m, 300$\mu$m, 325$\mu$m, 350$\mu$m, 375$\mu$m, 400$\mu$m, 425$\mu$m, 450$\mu$m, 475$\mu$m, 500$\mu$m, 525$\mu$m, 550$\mu$m, 575$\mu$m, 600$\mu$m, 675$\mu$m, 700$\mu$m, 725$\mu$m, 750$\mu$m, 775$\mu$m, 800$\mu$m, 825$\mu$m, 850$\mu$m, 875$\mu$m, 900$\mu$m, 925$\mu$m, 950$\mu$m, 975$\mu$m, and 1000$\mu$m. Ideally, the positive electrode has a thickness of between 400 and 600 $\mu$m. In one aspect, the positive electrode comprises a stack of two or more layers of the segregated network of nanosheets of the 2D conducting materials. The stacking of the layers can be achieved by either (i) coating an additional slurry casted layer(s) on top of a first slurry casted layer to achieve thick electrodes wherein the multilayers are subsequently dried or (ii) coating an additional slurry casted layer(s) on top of a previously coated and dried slurry casted layer to achieve a thick electrode in steps.

In one aspect, there is provided a negative electrode comprising the composite described above.

In one aspect, the negative electrode has a composition wherein the nanosheets of conducting materials (such as graphene, transition metal dichalcogenides (TMDs), transition metal oxides or MXene, or a combination thereof) have a mass fraction (Mf) in the electrode of 5 - 50 wt%. Preferably, the nanosheets of conducting materials (such as graphene, transition metal dichalcogenides (TMDs), transition metal oxides or MXene, or a combination thereof) have a mass fraction (Mf) in the electrode of 10 - 40 wt%.

In one aspect, the nanosheets of conducting materials (such as graphene, transition metal dichalcogenides (TMDs), transition metal oxides or MXene, or a combination thereof) have a mass fraction (Mf) in the electrode of 20 - 30 wt%.

In one aspect, the negative electrode has a thickness from between 200$\mu$m to 1000$\mu$m; preferably from between 400$\mu$m to 1000$\mu$m. That is, a thickness selected from 200$\mu$m, 250$\mu$m, 275$\mu$m, 300$\mu$m, 325$\mu$m, 350$\mu$m, 375$\mu$m, 400$\mu$m, 425$\mu$m, 450$\mu$m, 475$\mu$m, 500$\mu$m, 525$\mu$m, 550$\mu$m, 575$\mu$m, 600$\mu$m, 675$\mu$m, 700$\mu$m, 725$\mu$m, 750$\mu$m, 775$\mu$m, 800$\mu$m, 825$\mu$m, 850$\mu$m, 875$\mu$m, 900$\mu$m, 925$\mu$m, 950$\mu$m, 975$\mu$m, and 1000$\mu$m. Ideally, the negative electrode has a thickness of between 400 and 600 $\mu$m. In one aspect, the negative electrode comprises a stack of two or more layers of the segregated network of nanosheets of the 2D conducting materials. The stacking of the layers can be achieved by either (i) coating an additional slurry casted layer(s) on top of a first slurry casted layer to achieve a thick multi-layered wet electrode wherein the multilayers are subsequently dried or (ii) coating an additional slurry casted layer(s) on top of a previously coated and dried slurry casted layer to achieve a thick electrode in steps.

It will be appreciated by those skilled in the art that alternative techniques to slurry casting can be employed to fabricate electrodes. For example, ink jet printer methodology (a technique where the ink is deposited on a substrate in a controlled manner with accurate positioning); roll-to-roll coating or processing (a process of printing or patterning the slurry onto a roll of flexible plastic or metal substrate); and other techniques such as spraying (electrospray, ultrasonic-spray, conventional aerosol spray), blade coating, filtration, screen printing, drop casting and 3D printing can all be used.

In one aspect, there is provided a non-rechargeable battery comprising an anode material, a cathode material, and an electrolyte, wherein the anode material and the cathode material comprise the composite described above.

In one aspect, there is provided a rechargeable battery comprising an anode material, a cathode material, and an electrolyte, wherein the anode material and the cathode material comprise the composite described above.

In one aspect, there is provided a method for producing a positive or negative electrode, the method comprising mixing aqueous dispersions of nanosheets of conducting materials, or a combination thereof, with a particulate active material powder to form a uniformly distributed spontaneously formed segregated network, and depositing the uniformly distributed spontaneously formed segregated network on a substrate to yield a robust, flexible electrode.

In one aspect, the mixture is slurry cast onto a substrate. Preferably, the substrate is selected from glass, semi-conductors, metal, ceramic, Aluminium foil, Copper foil or other stable conductive foils or layers.

In one aspect, the dispersion of nanosheets of conducing materials with the particulate active material has an apparent viscosity of between about 0.50 Pa/s to about 1.0 Pa/s. Ideally, the dispersion has an apparent viscosity of between about 0.60 Pa/s to about 0.80 Pa/s. Preferably, the dispersion has an apparent viscosity of between about 0.70 Pa/s to about 0.75 Pa/s.

The viscosity of the dispersion is achieved using a high concentration of the 2D nanosheets of conducting materials. For example, a concentration of MXenes of about 36 mg/ml results in an apparent viscosity about 0.71 Pa/s.

There is also provided a use of the composite described above in the manufacture of electrodes.

There is also provided a high areal capacity battery comprising electrodes as described above.

*Definitions*

In the specification, the term "2-dimensional membrane" should be understood to mean a two-dimensional network of 2-dimensional nanosheets which is very thin but of extremely large area.

In the specification, the term "2-dimensional nanosheets" should be understood to mean atomically thin sheets of a conductive (or semi-conductive) material.

In the specification, the term "areal capacity electrode" and "areal capacity battery" should be understood to mean the area-normalized specific capacity of an electrode or a battery, respectively.

In the specification, the term "composite" should be understood to mean a mixture of two or more components that, when combined, provide a mechanically stable and conductive network that have very high mechanical toughness. This toughness allows very thick electrodes to be made because it prevents crack formation (a process analogous to mud-cracking seen in drought conditions on dry river beds, for example, and which occurs during the manufacturing/drying of any particulate films thicker than some critical value) during charging/discharging, which improves stability. Thick electrodes store more Lithium ions and yield higher energy density.

In the specification, the term "electrode active material" should be understood to mean an oxide material with poor conductivity to which two dimensional nanosheets of conductive material are added. Such electrode active materials that can be used for positive and/or negative electrodes include silicone, graphene, ceramics ($SiO_2$, $Al_2O_3$, $Li_4Ti_5O_{12}$, $TiO_2$, $CeO_2$, $ZrO_2$, $BaTiO_3$, $Y_2O_3$, MgO, CuO, ZnO, $AlPO_4$, AIF, Si3N4, AlN, TiN, WC, SiC, TiC, $MoSi_2$, $Fe_2O_3$, $GeO_2$, $Li_2O$, MnO, NiO, zeolite), $LiNi_xMn_yCo_zO_2$ (such as $LiNi_{0.7}Co_{0.3}O_2$), $LiCoO_2$, $MnO_2$, $LiMn_2O_4$, $LiFePO_4$, and $LiMnPO_4$. When the active material is $LiNi_xMn_yCo_zO_2$, x+y+z = 1.

In the specification, the term "segregated network" should be understood to mean a network of suitable nano-materials which spans the entire sample but is locally in the form of a porous, two-dimensional network which can wrap the active material particles and acts as a scaffold that holds the active particles in place. The segregated network spontaneously forms when the conducting materials (such as TMDs, transition metal oxides, graphene or MXenes) are added to the active material in the composite (such as micro-silicon). While MXenes are used herein to illustrate an example of the claimed invention, MXenes can also be replaced by, or combined with nanosheets of other conducting materials (such as graphene, TMDs, metal oxides, *etc*.) to form the segregated network that spontaneously creates a two-dimensional membrane around the active material particles. Essentially, the segregated network composite consists of a disordered array of particles (the active material) wrapped in a continuous, locally 2D, network of nanosheets of conducting materials, which when collected together, form the architecture of an electrode.

In the specification, the term "MXenes" should be understood to mean a class of two-dimensional inorganic compounds. These materials consist of few atoms thick layers of transition metal carbides, nitrides, or carbonitrides. MXenes have the general formula $M_{n+1}X_nT_x$, where T is an (optional) functional group (e.g. O, F, OH) and n = 1, 2, or 3. MXene carbides have been synthesized that are composed of two transition metals. MXenes in this new family have the general formulas $M'_2M''C_2$ or $M'_2M''_2C_3$, where M' and M" are different transition metals. M can also be two different metals, forming ordered atomic structures. Examples of MXenes are, but not limited to, Ti2C, $(Ti_{0.5},Nb_{0.5})_2C$, $V_2C$, $Nb_2C$, $Mo_2C$, $Ti_3C_2$, $Ti_3CN$, $Zr_3C_2$, $Hf_3C_2$; $Ti_4N_3$, $Nb_4C_3$, $Ta_4C_3$; $Mo_2TiC_2$, $Cr_2TiC_2$; and $Mo_2Ti_2C_3$. Each of the examples given here can have a functional group $T_x$ attached thereto.

In the specification, the term "battery" should be understood to mean an electric battery, consisting of cathode, anode, separator and electrolyte, which provided to power electrical devices such as flashlights, smartphones, and electric cars.

In the specification, the term "supercapacitor" should be understood to mean a high-capacity capacitor with capacitance values much higher than other capacitors, which are used in applications requiring many rapid charge/discharge cycles.

In the specification, the term "catalyst" should be understood to mean some special materials/composites, which are used to increase the rate of a chemical reaction but not be consumed in the catalysed reaction and can continue to act repeatedly.

In the specification, the term "fuel cell" should be understood to mean an electrochemical cell that converts the chemical energy from a fuel into electricity through an electrochemical reaction of hydrogen fuel with oxygen or another oxidizing agent.

In the specification, the term "homogenous mixture" should be understood to mean that the nanosheets of conducting materials and the active particulate material form a homogenous mixture in an aqueous solution. By that, it is meant the nanosheets of conducting materials are dispersed uniformly within the space between the active particulate materials. This homogenous mixture is present when the mixture is in both the aqueous (slurry) and dried (composition) states.

## Brief Description of the Drawings

The invention will be more clearly understood from the following description of an embodiment thereof, given by way of example only, with reference to the accompanying drawings, in which:-

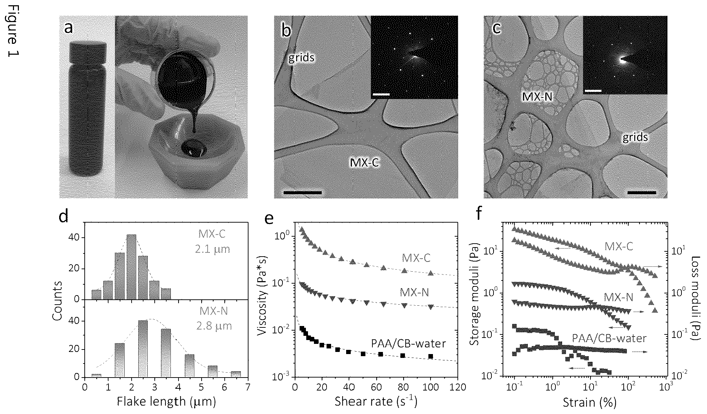

**Figure 1** illustrates a) Optical images of the MX-C ink, showing its viscous nature. TEM images of b) MX-C and c) MX-N nanosheets. Insets are the corresponding selected area electron diffraction (SAED) patterns of the nanosheets. d) Histograms of MX-C and MX-N flake lengths obtained *via* TEM statistics. e-f) Rheological properties of MX-C and MX-N inks with e) viscosity plotted as a function of shear rate and f) storage and loss moduli plotted as a function of strain. Also included is the control sample made of PAA (aqueous binder) and carbon black (CB) dispersed in water (PAA/CB-water).

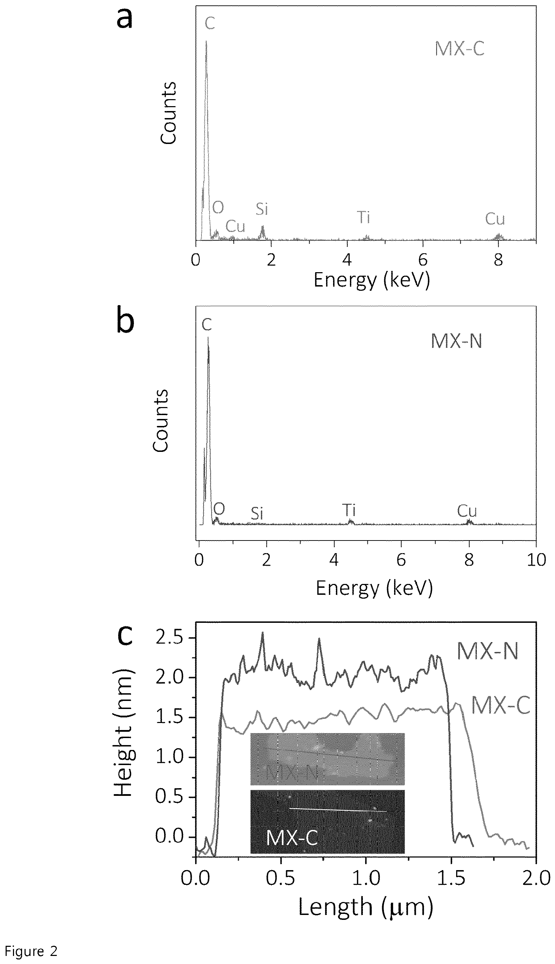

**Figure 2** illustrates EDX of (a) MX-C and (b) MX-N samples. (c) AFM and height profiles showing the average thickness of the samples (MX-C: ~ 1.5 nm and MX-N: ~2 nm).

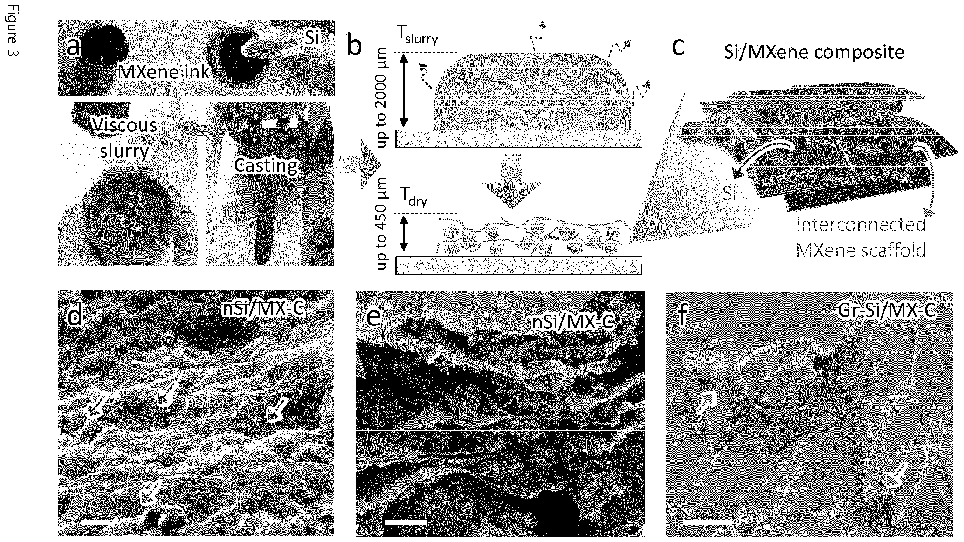

**Figure 3** illustrates a) Composite electrode preparation from Si/MXene ink-based slurry. b) The slurry drying process and c) scheme displaying the resulting Si/MXene composite. The MXene nanosheets form an interconnected scaffold and enable the formation of a thick electrode. d) Top-view and e) cross-sectional SEM images of nSi/MX-C electrode, showing the Si nanoparticles (NPs) are well wrapped by the MX-C nanosheets in a manner of sandwiching. f) Top-view SEM image of Gr-Si/MX-C electrode, indicating that the Gr-Si particles are well wrapped by the interconnected MX-C network.

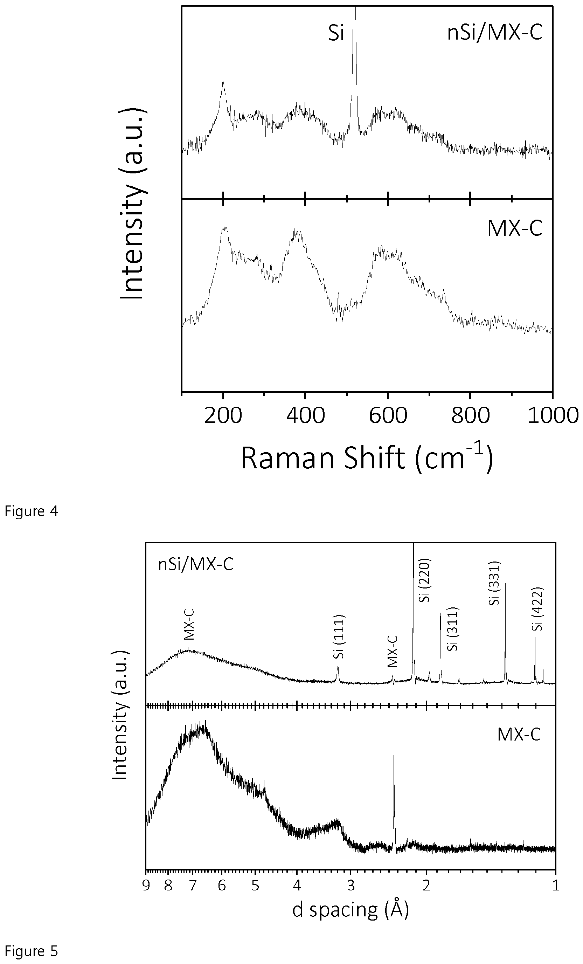

**Figure 4** illustrates Raman spectra for pure MX-C film and nSi/MX-C composite anode (MX-C $M_f$ = 30 wt%). In the composite, the characteristic peaks from MX-C well match to those for pure MX-C film, indicating no phase change during the composite-electrode fabrication process. The characteristic Si peak at $\sim$520 cm$^{-1}$ is evident in the composite spectrum.

**Figure 5** illustrates XRD patterns for pure MX-C film and nSi/MX-C composite anode (MX-C $M_f$ = 30 wt%). We note that the X-ray source is Mo instead of Cu. XRD pattern of the composite corresponds well to the pure MX and Si, indicating that the crystal structures are not changed.

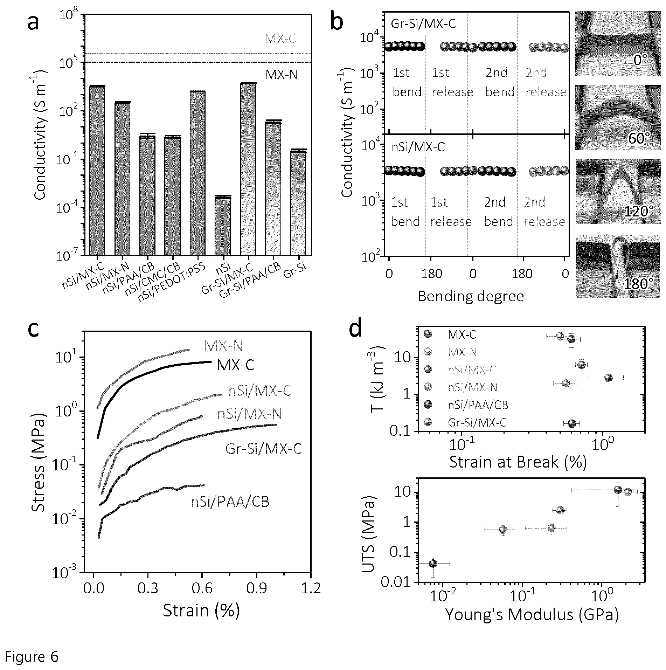

**Figure 6** illustrates a) Bar chart comparing the electrical conductivity comparison of various electrodes. The dashed lines are the electrical conductivity of MX-C and MX-N freestanding films. b) Electrical conductivity change of the nSi/MX-C and Gr-Si/MX-C electrodes upon bending, as shown in the insets. The almost constant conductivity values indicate the robust nature of the Si/MXene electrodes. c-d) Comparison of the mechanical properties' comparison of various electrodes. c) Representative stress-strain curves for various electrodes. d) Top: tensile toughness (i.e. tensile energy density required to break film) plotted as a function of strain at break (%). Bottom: Tensile strength plotted as a function of Young's modulus. The mechanical properties indicate that the MXene nanosheets confer mechanical reinforcement component, resulting in much enhanced toughness and tensile strength.

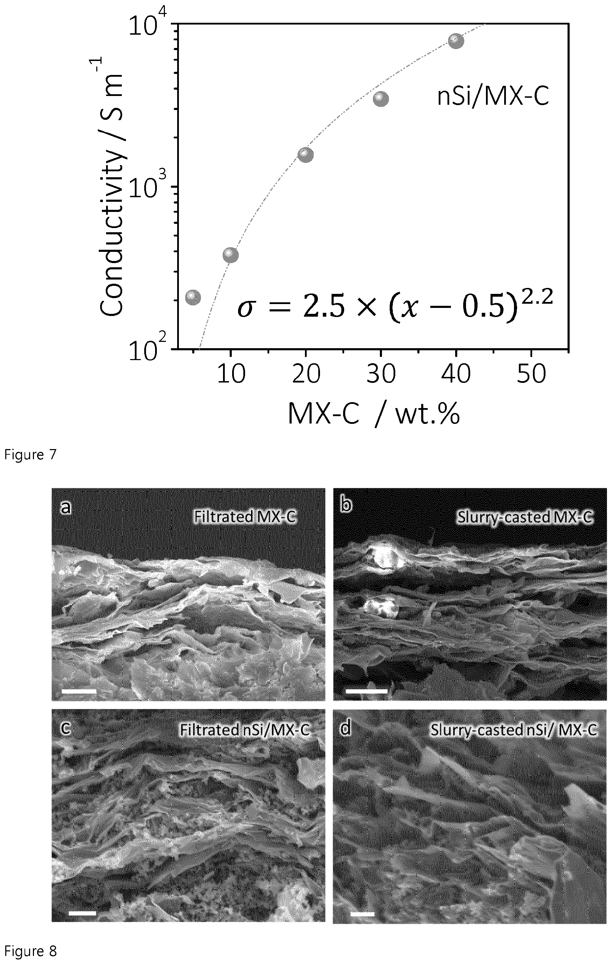

**Figure 7** illustrates the electrical conductivity of nSi/MX-C as a function of MX $M_f$ (5-40 wt%). The line fits well to percolation-scaling law, $\sigma \propto (\phi - \phi_{c,e})^{n_e}$, where $\phi_{c,e}$ and $n_e$ are the electrical percolation threshold and exponent, respectively. The large exponent ($n_e$=2.2) are expected for 2D conductive networks. The percolation threshold of MX-C is 0.5 wt%, much lower than the value observed from the typically used conductive agent, carbon black ($\phi_{c,e}$ = 3-25 wt%).

**Figure 8** illustrates SEM images of (a) filtrated MX-C and (b) slurry-casted MX-C films, showing a layered morphology with MX-C nanosheets stacked together. SEM images of (c) filtrated nSi/MX-C and (d) slurry-casted nSi/MX-C electrodes, showing a sandwiched structure with nSi particles covered by the MX-C interconnected network in both cases. The SEM images of these samples confirm that, the morphology difference impacted by the electrode fabrication method is trivial. Therefore, it is reasonable and fair to estimate the mechanical performance of all the slurry-casted electrodes (such as nSi/MX-C and Gr-Si/MX-C) by measuring the strain-stress curves of the corresponding vacuum-filtrated samples, as indicated in Figure 6c-d.

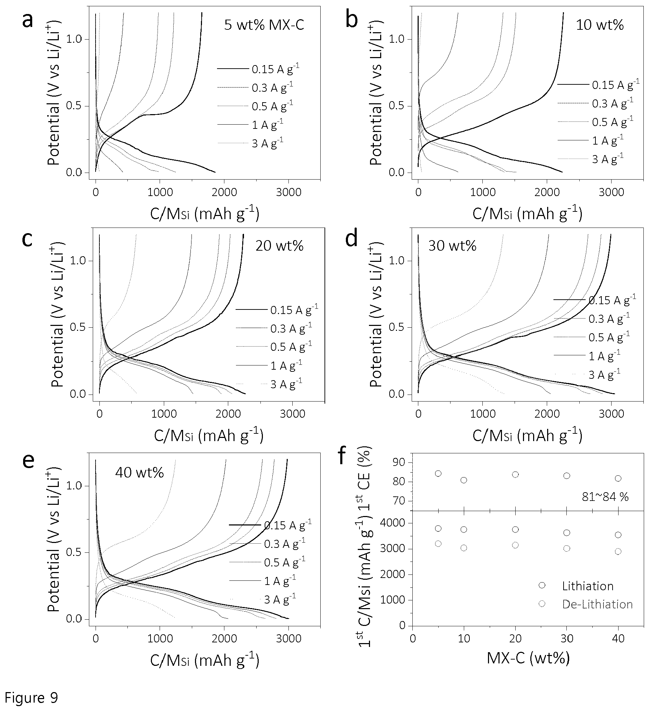

**Figure 9** illustrates (a-e) galvanostatic charge-discharge (GCD) curves of nSi/MX-C anodes with different compositions (MX-C $M_f$ = 5-40 wt%) at various current densities (0.15-3 A/g, corresponding to 1/20-1 C rate). (f) Bottom: 1st lithiation/de-lithiation capacities of nSi/MX-C anodes as a function of MX-C $M_f$. Top: 1st Coulombic efficiency (CE) of nSi/MX-C anodes. All samples show a high 1st CE of 81-84% and typical GCD curves as expected for Si.

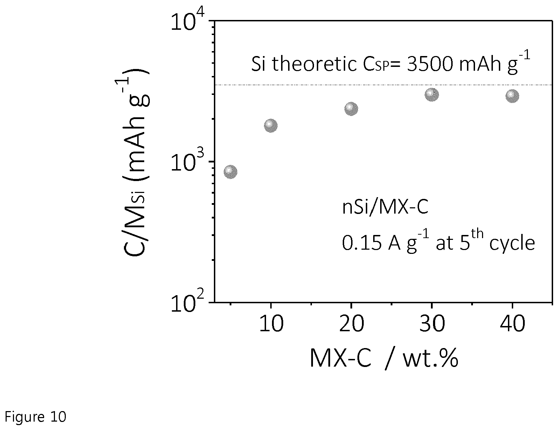

**Figure 10** illustrates Si specific capacity (C/$M_{Si}$) of nSi/MX-C anodes as a function of MX-C $M_f$ (5-40 wt%). C/$M_{Si}$ is maximized to approach the theoretical value (dashed line, Si $C_{SP}$ = $\sim$3500 mAh/g) at MX-C $M_f \geq$ 30 wt%, clearly suggesting the optimum MX-C $M_f$ of 30 wt%.

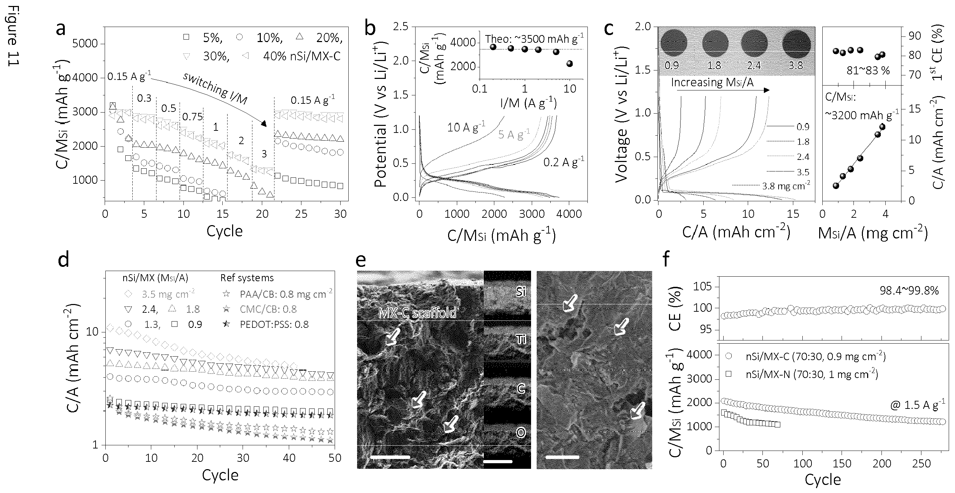

**Figure 11** illustrates a): Rate performance comparison for nSi/MX-C electrodes with various MX-C mass fractions. Note that the capacity values are normalized to the mass of silicon (C/$M_{si}$). b) Asymmetric charge-discharge curves of the typical nSi/MX-C electrode. Inset is the as-obtained C/$M_{Si}$ at various delithiation rates. c) Left: 1st cycle charge-discharge curves at a 0.15 A/g ($\sim$1/20 C-rate) of the nSi/MX-C electrodes (MX-C $M_f$=30 wt%) with the $M_{Si}$/A ranging from 0.9 to 3.8 mg/cm$^2$. Insets are the optical images of these electrodes. Right: 1st Coulombic efficiency (top) and areal capacity (bottom) of nSi/MX-C (MX-C $M_f$=30 wt%) with various $M_{Si}$/A. The line slope indicates the average C/$M_{Si}$ ($\sim$3200 mAh/g) achieved in various electrodes. d) Cycling performance comparison among the electrodes with various $M_{Si}$/A. Also included is the control sample made with PAA and carbon black as the aqueous binder and conductive agent, respectively. e) Cross-sectional (left) and top-view (right) SEM images of nSi/MX-C (MX-C $M_f$=30 wt%, $M_{Si}$/A=2.4 mg/cm$^2$) after cycling; also included is the EDX mapping, showing a uniform distribution of nSi and MX-C in the cycled electrode. f) Lifetime of nSi/MX-C and nSi/MX-N (MXene $M_f$=30 wt%) electrodes at a low $M_{Si}$/A (0.9$\sim$1 mg/cm$^2$) and a high rate (1.5 A/g). Also included is the Coulombic efficiency of nSi/MX-C (top).

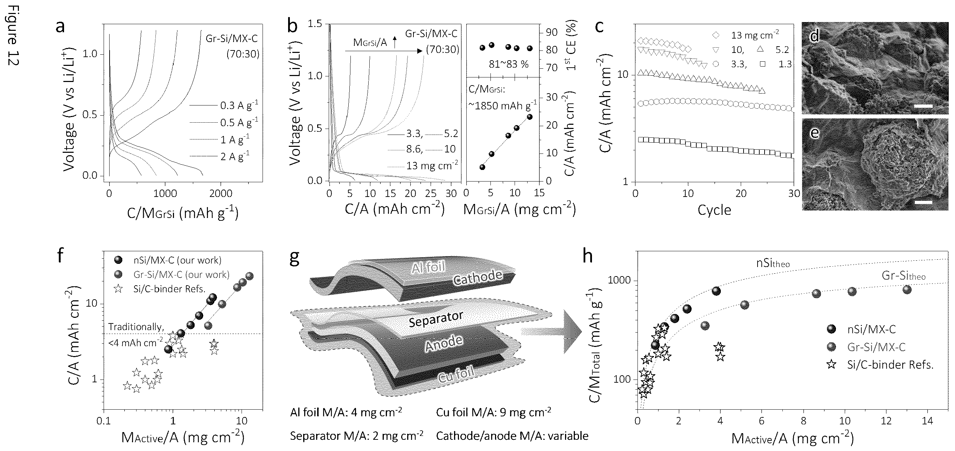

**Figure 12** illustrates a) Typical galvanostatic charge-discharge (GCD) curves of Gr-Si/MX-C electrode (MX-C $M_f$=30 wt%, $M_{GrSi}$/A=3.3 mg/cm$^2$) at various current densities. b) Left: GCD profiles of Gr-Si/MX-C electrodes with various M/A at 0.1 A/g ($\sim$1/20 C-rate). Right: 1st CE (up) and C/A (down) of Gr-Si/MX-C plotted as a function of $M_{Gr-Si}$/A. c) Cycling performance of Gr-Si/MX-C electrodes with various $M_{GrSi}$/A at 0.2 A/g ($\sim$1/10 C-rate). d-e) SEM images of the Gr-Si/MX-C electrode ($M_{GrSi}$/A=3.3 mg/cm$^2$) after cycling, showing that the MX-C binder tightly wrapped the Gr-Si particles and maintained the structural integrity. f) Areal capacity comparison of this work to other Si/conductive-binder (Si/C-binder) systems, showing that our Si/MX-C electrodes have exhibited both high $M_{Active}/A$ and C/A compared to the literature. g) Scheme of components inside the cell, highlighting the importance of utilizing high $M_{Active}/A$ electrodes in reducing the contribution from the inactive components. h) Cell-level specific capacity ($C/M_{Total}$) on the anode side plotted as a function of $M_{Active}/A$, and compared to the reported Si/C-binder systems. Dashed lines indicate the theoretical performances for the nSi (blue line) and Gr-Si (red line) particles.

## Detailed Description of the Drawings

Here, it is shown that the production of very thick electrodes which retain almost all of their intrinsic capabilities can be achieved *via* simultaneously boosting the electrical/mechanical properties of granular electrode materials by using, for example, 2D nanosheets of conductive material, specifically in the form of segregated networks, as both binder and conductive additive, without any additional polymer or CB. By adding 2D nanosheets of conductive material to high-performance anode/cathode materials such as silicon and $LiNi_xMn_yCo_zO_2$ (NMC), a new type of hierarchical composite is shown where the 2D nanosheets arrange themselves into networked membranes that envelop the active material particles. These networks significantly improve the mechanical properties, allowing the fabrication of thick electrodes, and ensure their stability, even during repeated charge/discharge. At the same time the electrode conductivity is dramatically increased, facilitating fast charge distribution, even in thick electrodes. The production of extremely thick electrodes (up to 600 $\mu$m) with $C_{SP}$ approaching theoretical values for each electrode material, enables the production of full-cells with areal capacities and specific energies considerably higher than any previous reports. The thickness of the electrodes can also be further increased by stacking two or more layers of the segregated network of the nanosheets of 2D conductive materials, where the thickness of each layer is no more than 450-600 $\mu$m. The production involves simple and scalable production techniques, which can be applied to both anodes and cathodes and is compatible with any high-performance electrode material.

### *Materials and Methods*

### Multi-layered MXene preparation

Multi-layered MXene was prepared as follows: Typically, 0.5 g of lithium fluoride (LiF, Sigma Aldrich, USA) were added to 10 ml, 9 M of hydrochloric acid (HCl, 37 wt%, Sigma Aldrich, USA), followed by 10 min stirring at room temperature (RT) until the formation of a clear solution. After that, 0.5 g $Ti_3AlC_2$ MAX phase (Y-Carbon Corp., Ukraine) were slowly added over the course of 20 min at room temperature (RT) under magnetic stirring, then transferred to an oil bath and allowed to react for 24 h at 35 ºC under continuous stirring. Once the reaction ended, the suspension was transferred to centrifuge tubes and centrifuged at 3500 rpm for 3 min. The supernatant was then decanted and 15 mL of fresh DI water was added to the suspension followed by vigorous shaking and then another round of centrifugation at 3500 rpm for 3 min. This washing process was repeated 4 times until the pH of the supernatant became ~6. The supernatant was then decanted, leaving the m-$Ti_3C_2T_x$ on the bottom of the centrifuge tube for making the $Ti_3C_2T_x$ ink.
m-$Ti_3CNT_x$ using a similar method were prepared as follows: 0.5 g Ti3AlCN was slowly added to a solution containing 0.66 g LiF and 10 ml HCl (6 M). The reaction time was set to 16 h. All the rest of the steps were similar to the $Ti_3C_2T_x$ counterpart.

### MXene ink preparation:

MXene viscous ink was prepared as follows: 15 mL of deionized water (DI-water) was added to the as-etched, multi-layered MXene ($Ti_3C_2T_x$ or $Ti_3CNT_x$), followed by vigorous shaking by hand/vortex machine for 15 min. Then the mixture was centrifuged at 1500 rpm for 30 min. The top 80% supernatant was collected and centrifuged at 5000 rpm for 1 hr. After decanting the supernatant, 5 mL of DI-water was added to the sediment followed by vigorous shaking for 10 min, resulting in viscous MXene ink denoted as MX-C ($Ti_3C_2T_x$) and MX-N ($Ti_3CNT_x$), respectively.

### Electrode fabrication:

Electrodes were prepared *via* a slurry-casting method using MXene viscous aqueous ink without the addition of any other conductive additives or polymeric binder. Typically, nanosized silicon powders, nSi, (or graphene-wrapped Si, Gr-Si, Angstron-Materials) were mixed with MX-C ink and ground into a uniform slurry before casting onto Cu foil using a doctor blade. After drying at ambient conditions for 2 h, electrodes were punched (12 mm in diameter) and vacuum-dried at 60 °C for 12 h to remove residual water. The MXene $M_f$ in the electrodes (ranging from 5 to 40 wt%) was controlled by changing the mass ratio of Si powders to MXene during the slurry preparation. In addition, electrodes with different mass loadings (M/A) were obtained by changing the height of doctor blade (150-2100 $\mu$m) when casting

a slurry with 30 wt% of MXene. The resultant electrodes possessed various thicknesses and thus various mass loadings and were denoted as nSi/MX-C (or Gr-Si/MX-C). n-Si/MX-N electrodes were similarly fabricated by mixing nSi powder with the MX-N viscous aqueous ink. The mass fraction of MX-N $M_f$ in the electrodes was 30 wt%. Detailed compositions and thicknesses of the Si/MXene electrodes can be found in Table 2 and Table 3, respectively.

Other methods can be used to deposit the slurry preparation on a substrate. For example, the slurry preparation can be inkjet-printed (using a Dimatix DMP2800 Material printer, for example) on a variety of substrates, such as $AlO_x$-coated PET (NB-TP-3GU100, Mitsubishi Paper Mills Ltd.), glass, Kapton, *etc.* The slurry preparation can also be extrusion-printed on substrates using a 3D printer. Other methods including ink jet printer methodology (a technique where the ink is deposited on a substrate in a controlled manner with accurate positioning), roll-to-roll coating or processing (a process of printing or patterning the slurry onto a roll of flexible plastic or metal substrate), spraying (electrospray, ultrasonic-spray, conventional aerosol spray), blade coating, filtration, screen printing, drop casting and 3D printing can all be used.

Material characterization:

The rheological properties of MXene inks, as well as the reference sample, were studied on the Anton Paar MCR 301 rheometer. Morphologies and microstructure of the Si/MXene electrodes were examined by scanning electron microscopy (SEM), Raman spectroscopy and XRD. The electrical conductivity of the electrodes was measured using a four-point probe technique. To exclude the conductivity contribution from the Cu foil, we casted the composite slurry (made of Si materials with MXene aqueous ink) as well as the reference sample (nSi/PAA/CB) onto glass plates and dried at ambient condition. Then, four lines made of Ag paint (Agar Scientific) were brushed in parallel on the films' surface. The sheet resistance of the films was measured using a Keithley 2400 source meter, and converted to the electrical conductivity based on the samples' geometric information (length, width and thickness). To evaluate the mechanical properties of the Si/MXene composites, strain-stress tests were performed. Since the slurry casted films cannot be peeled off from the substrates (either Cu foil or glass), therefore, we grinded the composite slurry and then vacuum filtrated through nitrocellulose membrane (Whatman, USA). The total M/A in the MXenes as well as composite films (nSi/MX-C, nSi/MX-N and Gr-Si/MX-C) was controlled at 1~2 mg/cm$^2$ (thickness ~20 ~30 $\mu$m) while the MXene mass fraction, $M_f$, was controlled to be 30 wt.%. After filtration and naturally drying, the films were peeled off from the membrane, cut into strips and stored under vacuum for further use. The strain-stress curves of the strips were measured on a Zwick Z0.5 Pro-Line Tensile Tester (100 N Load Cell) at a strain rate of 0.5 mm/min. Each data point was obtained by averaging the results from four measurements.

To study the robustness of the Si/MXene films, the two ends of the strips were fixed to the substrates. Two lines of Ag paint were brushed onto the two ends of the strip, which was connected to the multimeter through two pieces of Ag wire. The resistance of the samples upon bending/releasing at different degrees was recorded and converted to the electrical conductivity. The conductivity was further plotted as a function of $(L_0-L)/L_0$, indicative of different bending states, where $L_0$ is the original length of the strip, $(L_0-L)$ is the real-time horizontal length of the bended film.

Electrochemical characterization:

The electrochemical performance of the Si/MXene electrodes was evaluated in the half-cell configuration (2032-type, MTI Corp.). Once the slurry-casted films were vacuum dried, electrodes with diameter=12 mm (geometric area: 1.13 cm$^2$) were punched and weighed to determine the areal mass loading (M/A). The electrochemical properties of the Si/MXene composite electrodes were evaluated in a half-cell configuration (2032-type coin cells, MTI Corp.) which were assembled in an Ar-filled glovebox (UNIlab Pro, Mbraun). Inside the coin cell, the Si/MXene is the working electrode while the Li disc (diameter: 14 mm, MTI Corp.) is the counter and reference electrode. The separator was Celgard 2320 (Celgard, USA) and the electrolyte was 1 M lithium hexafluorophosphate (LiPF$_6$) in ethylene carbonate/diethyl carbonate/fluoroethylene carbonate (EC/DEC/FEC, 3:6:1 in v/v/v, BASF).

Galvanostatic charge-discharge (GCD) tests were performed on a potentiostat (VMP3, Biologic) in a voltage range of 0.005-1.2 V. The areal capacities (C/A) of the electrodes were obtained by dividing the measured cell capacity by the geometric electrode area (1.13 cm$^2$). The specific capacities of the electrodes were obtained by C/M. Here, M can be the mass of the electrode ($M_{total}$) or the active Si material ($M_{Si}$), resulting in the specific capacity per electrode ($C/M_{total}$) or per active Si ($C/M_{Si}$). To investigate the maximum accessible C/A of the electrodes, the cells were tested at a reasonably slow condition of ~1/20 C-rate (0.15 A/g for nSi anodes and 0.1 A/g for Gr-Si anodes). The electrode was fully lithiated by discharging the cells at a very slow rate (~1/20 C-rate, 0.15 A/g) then delithiated the electrode (charging the cell) at various rates, ranging from 1/20 to 1 C-rate. The cycling performance of the cells were measured at a rate of ~1/10 C (0.3 A/g for nSi anodes and 0.2 A/g for Gr-Si anodes). After cycling, the cells were disassembled, rinsed with dimethyl carbonate (DMC) several times and dried inside the glove box at room temperature before the SEM analysis.

**Results**

MXene inks characterization

The synthesis of $Ti_3C_2T_x$ (MX-C) and $Ti_3CNT_x$ (MX-N): After etching the MAX precursors in hydrochloric acid (HCl)-lithium fluoride (LiF) solution, multi-layered MXenes, with a certain degree of delamination were obtained. Upon vigorous manual shaking of the MXene/water suspension, the clay-like multi-layered MXenes further swelled and delaminated into MX-C and MX-N flakes, forming concentrated aqueous inks. The viscous feature of the MX-C ink is shown in Figure. 1a. Both MX-C/MX-N inks are made of clean flakes with a hexagonal atomic structure (Figure 1b,c and Figure 2a,b), agreeing with previous reports. The atomic force microscopy and height profiles (Figure 2c) suggest these nanosheets are predominantly single-layered. These two types of inks possess a similar concentration (~25 mg/mL), and the mean flake size is in the range of 2.1-2.8 μm in both cases (Figure 1d).

As mentioned above, the critical cracking thickness (CCT) of Si-based anode is directly related to the viscosity of the slurry. Therefore, the rheological behaviours of MXene aqueous inks, together with a reference sample made of traditional dual-component additives (PAA/carbon black, CB) dispersed in water, were evaluated. All specimens (with the same solid concentration) demonstrate non-Newtonian characteristics and shear-thinning (pseudoplastic) behaviour; and the apparent viscosity ($\eta$, Pa·s) decreases with shear rate ($\gamma$, s$^{-1}$), as demonstrated in Figure 1e. Such a behaviour can be well modelled using the Ostwald-de Wael power law:

$$\eta = k\gamma^{n-1} , \qquad\qquad (1)$$

where k and n are the consistency and shear thinning index, respectively. The empirical parameters of the studied suspensions are summarized in Table 1.

**Table 1.** Rheological parameters of MXene inks compared to PAA/CB-water

| Additives system | Solid concentration | Consistency index, k | Shear thinning index, n |
|---|---|---|---|
| MX-C ink | 25 mg/ml | 3.25 | 0.35 |
| MX-N ink | 25 mg/ml | 0.17 | 0.64 |
| PAA/CB-water | 25 mg/ml | 0.022 | 0.52 |

The apparent viscosity in the MX-C ink is one and two orders of magnitude higher than that of the MX-N ink and PAA/CB-water, respectively. In addition, the viscoelastic properties of the inks, in particular, storage and loss moduli, are important. These can be used to investigate regions of linear elastic deformation, yield points, and sample fluidisation, and give insight into the energetics of the sample network. The storage and loss moduli in these viscoelastic materials were plotted as a function of strain, showing much higher storage and loss modulus in MX-C, followed by MX-N and substantially higher than the PAA/CB-water system (Figure 1f). Such a rheological behaviour in the MXene inks should facilitate the formation of thick Si/MXene electrodes, as will be discussed below.

Electrode fabrication and characterization

Commercial Si powders, namely, nanoscale Si (nSi, $C_{SP}$=~3,500 mAh/g, size ~80 nm) and graphene-wrapped Si (Gr-Si, $C_{SP}$=~2,000 mAh/g, superstructure size ~10 μm), were chosen as models for high-capacity materials.

**Table 2.** Si/MX-C electrodes with various formulas

| Sample conditions | Vol. of MX-C ink (Conc. = 25 mg/ml) | MX-C content | nSi (or Gr-Si) powder |
|---|---|---|---|
| 5 wt% MX-C | 0.2 ml | 5 mg | 95 mg |
| 10 wt% MX-C | 0.4 ml | 10 mg | 90 mg |
| 20 wt% MX-C | 0.8 ml | 20 mg | 80 mg |
| 30 wt% MX-C | 1.2 ml | 30 mg | 70 mg |
| 40 wt% MX-C | 1.6 ml | 40 mg | 60 mg |

Si powders were ground with MXene aqueous inks to give a concentrated, homogenous and viscous slurry, which can be coated onto Cu foil using an industry-compatible slurry-casting technique without adding any polymeric binders or CB (Figure 3a). Importantly, the high viscosity of MXene inks (and other inks comprising 2D conductive nanosheets of TMDs, graphene or transition metal oxides, or combinations thereof) enables an extremely thick coating of the slurry (up to 650 $\mu$m and 2100 $\mu$m for the nSi and Gr-Si, respectively for the slurry thickness, as shown in Figure 3b and Table 3). In the wet slurry, the ultrathin MXene nanosheets distribute randomly and further knit into an interconnected network while wrapping the Si particles. Upon evaporation, mechanically robust electrodes are thus formed, as shown in Figure 3c. The surface of the dried electrodes remains smooth with thickness up to ~350 $\mu$m before cracking first occurs (Table 3), yielding a CCT much larger than the achievable thickness with traditional binders (<100 $\mu$m).

**Table 3.** Blade thickness and M/A of the as-fabricated Si/MXene electrodes.

| Sample | Blade thickness | Electrode thickness | Sample $M_{Total}/A$ | Sample $M_{Active}/A$ | Electrode density |
|---|---|---|---|---|---|
| nSi/MX-C (MX-C $M_f$ = 30 wt%) | 150 $\mu$m | 23 $\mu$m | 1.2 mg/cm$^2$ | 0.9 mg/cm$^2$ | 0.52 g/cc |
| | 200 $\mu$m | 35 $\mu$m | 1.9 mg/cm$^2$ | 1.3 mg/cm$^2$ | 0.54 g/cc |
| | 300 $\mu$m | 46 $\mu$m | 2.6 mg/cm$^2$ | 1.8 mg/cm$^2$ | 0.57 g/cc |
| | 400 $\mu$m | 53 $\mu$m | 3.4 mg/cm$^2$ | 2.4 mg/cm$^2$ | 0.64 g/cc |
| | 600 $\mu$m | 79 $\mu$m | 5 mg/cm$^2$ | 3.5 mg/cm$^2$ | 0.63 g/cc |
| | 650 $\mu$m | 83 $\mu$m | 5.4 mg/cm$^2$ | 3.8 mg/cm$^2$ | 0.65 g/cc |
| Gr-Si/MX-C (MX-C $M_f$ = 30 wt%) | 600 $\mu$m | 102 $\mu$m | 4.6 mg/cm$^2$ | 3.2 mg/cm$^2$ | 0.45 g/cc |
| | 900 $\mu$m | 150 $\mu$m | 7.4 mg/cm$^2$ | 5.2 mg/cm$^2$ | 0.49 g/cc |
| | 1500 $\mu$m | 250 $\mu$m | 12.6 mg/cm$^2$ | 8.6 mg/cm$^2$ | 0.50 g/cc |
| | 1800 $\mu$m | 290 $\mu$m | 14.8 mg/cm$^2$ | 10.4 mg/cm$^2$ | 0.51 g/cc |
| | 2100 $\mu$m | 351 $\mu$m | 18.6 mg/cm$^2$ | 13 mg/cm$^2$ | 0.53 g/cc |

Top-down and cross-sectional scanning electron microscopy (SEM) images with energy-dispersive X-ray (EDX) mapping confirm that the nSi particulates are uniformly wrapped by the interconnected MX-C skeleton (Figure. 2d,e). No phase changes of the active materials are observed during the slurry processing, as indicated by Raman spectra (Figure 4) and X-ray diffraction (XRD, Figure 5). The nSi/MX-N exhibits a similar porous morphology as that of nSi/MX-C. On the other hand, the Gr-Si/MX-C showcases a hierarchical nano-/macro-structure, in which the Gr-Si pseudo-spherical superstructures (~10 $\mu$m) are uniformly coated with robust, interconnected MX-C nanosheets (Figure 3f). Such a morphology provides extensive free volume that allows the expansion of the nanoscale Si during the electrochemical processes, which will be discussed below.

Electrical and mechanical characterization

To achieve high thickness and so high C/A, the Si-based anodes should possess high conductivity and mechanical toughness to ensure efficient charge transport and structural stability, respectively. Previous studies revealed that the electrical conductivity issue becomes more severe in high M/A electrodes, which limit the rate capability of the electrode. Here MXenes were employed to solve this issue. Other similar nanosheets of 2D conductive materials are also envisaged to solve this issue, such as, for example, Graphene, Silicene, Germanene, BiTe, $HfTe_2$, $MoTe_2$ (1T), $NbS_2$, $NbSe_2$, $PdSe_2$, $PdTe_2$, $PtSe_2$, $PtTe_2$, $TaSe_2$, $TaS_2$, $TiS_2$ (1T), $TiSe_2$, $TiTe_2$, $WTe_2$, ZrSiS. $ZrTer_2$, $ZrTe_3$, $ZrTe_5$, BSCCO, $Cr_2Si_2Te_6$, BiTlTe, CuFeTe, FeSe, FeTe, FeTeSe, $HfTe_2$, $VSe_2$, and $WTe_2$. Electrical measurements were performed on a range of Si/MXene electrodes as well as reference samples. Figure 6a reveals that by adding 30 wt% MXene to the Si, the conductivity has been improved roughly by $\times$1200 times for the nSi/MX-C (3448 S/m), $\times$120 times for the nSi/MX-N (336 S/m), and x50 times for the Gr-Si/MX-C (1010 S/m) compared to their respective traditional systems (nSi/PAA/CB and Gr-Si/PAA/CB). Moreover, the nSi/MX-C electrode conductivity scales with MX-C mass fraction ($M_f$) and can be explained in the frame of percolation theory (Figure 7). Importantly, the high electrical conductivity in the nSi/MX-C and Gr-Si/MX-C electrodes can be well-maintained upon repeatedly bending even in a twisted configuration (Figure 6b), indicating the robust nature inherited from the pure MX-C film. It should be noted that this is significant as the composite electrodes (nSi/MX-C and Gr-Si/MX-C) combines high M/A, an advanced electron transport network and mechanical flexibility, holding great promise for future wearable power sources.

To further demonstrate the mechanical reinforcement provided by MXene nanosheets, the mechanical properties of all Si/MXene composite electrodes (such as nSi/MX-C and Gr-Si/MX-C, *etc.*) were estimated and compared by measuring the stress-strain curves of the corresponding vacuum-filtrated films. This is justified by the roughly similar morphologies of the samples fabricated by the two methods (Figure 8). The tensile toughness (area under the stress-strain curve) is of particular interest and has been improved by $\times 40$ and $\times 15$ in the nSi/MX-C and Gr-Si/MX-C, respectively from the traditional electrode (nSi/PAA/CB) at the equivalent composition (Si $M_f$=70 wt%), as shown in Figure 6c,d. Even though the toughness and Young's modulus in the Si/MXene composites are lower than the pure MXene films, as expected they are higher than the traditional binder system. This allows a substantial improvement of the CCT, whose magnitude depends on the mechanical properties of the deposited materials. Consequently, mechanically robust electrodes with thickness up to 350 $\mu$m for the Gr-Si/MX-C are produced. This is much higher than the achievable thickness in the traditional binder systems. In addition, it's worth noting that the dried composite films cannot be peeled off from the Cu substrate, indicative of a strong adhesion force in the Cu/composite interface.

The superiority of MXene viscous ink over traditional dual-component electrode additives can be attributed to the excellent electrical and mechanical properties of MXene nanosheets. The metallic conductivity of both MX-C and MX-N enables fast electron transport across the composites, and thus allows reversible electrochemical reactions and high-rate performance. Furthermore, the interconnected MXene network results in effective mechanical reinforcement, allowing the production of thick electrodes and potentially preserving the structural integrity of the entire electrode upon cycling. This means that the dual-functionalized MXene network should render the Si/MXene composites with good $Li^+$ storage performance, as discussed below. The same can be said for other viscous inks comprising conductive or semi-conductive 2D nanosheets of TMDs, graphene or transition metal oxides, or combinations thereof.

Electrochemical characterization of nSi/MXene anodes

Investigating the electrochemical responses of nSi/MX-C electrodes. The dQ/dV and galvanostatic charge-discharge (GCD) profiles of nSi/MX-C electrodes (with various compositions) indicate typical curves that are typical for Si (Figure 9a and Figure 10a-e). All electrodes show a high 1st Coulombic efficiency (CE) of 81~84% (Figure 9b). This is significantly higher than other Si-based systems. The specific capacity per nSi mass ($C/M_{Si}$) at different current densities suggests that by adding 30 wt% MX-C conductive binder, both the rate capability (Figure 11a) and Si electrochemical utilization are maximized, approaching the theoretical capacity. Therefore, 30 wt% MXene was chosen in all Si/MXene composites. To probe the potentially achievable capacities of nSi, asymmetric charging-discharging was performed on the nSi/MX-C ($M_f$=30 wt%, $M_{Si}/A$=0.9 mg/cm$^2$); the composite was lithiated slowly then delithiated at different rates. Figure 11b shows representative asymmetric GCD curves with specific capacities presented in the inset. Almost theoretical values are achieved and maintained up to 5 A/g, suggesting that the high-rate response is enabled by the MX-C conductive network. Such an efficient interconnected network also facilitates the production of high $M_{Si}/A$ electrodes (Figure 11c, left panel), resulting in a C/A as high as 12.2 mAh/cm$^2$ (Figure 11c, right panel). The C/A of nSi/MX-C electrodes scales linearly with $M_{Si}/A$ over the entire thickness regime, leading to high $C/M_{Si}$ (~3200 mAh/g, dashed line) agreeing quite well with Figure 11b. This indicates that even in the high $M_{Si}/A$ electrodes, almost theoretical capacities have been achieved due to the presence of MX-C conductive binder.

The cycling stabilities of nSi/MX-C electrodes with various $M_{Si}/A$ were measured at 0.3 A/g (Figure 11d). While the high $M_{Si}/A$ electrode shows a relatively rapid capacity decay, reasonably stable capacities are achieved in the electrodes with low-medium range $M_{Si}/A$ (Figure 11d). For example, the capacity retention in the $M_{Si}/A$=0.9 mg/cm$^2$ is 84% after 50 cycles, in sharp contrast to 50% in the conventional electrode ($M_{Si}/A$=0.8 mg/cm$^2$, Figure 11d). Post-cycling SEM images suggest that the interconnected MX-C scaffold has been preserved in the medium $M_{Si}/A$ electrode (Figure 11e) but is disrupted in the high $M_{Si}/A$ electrode due to the large volume change. The degradation of Li-metal inside the cell is also part of the reason for the relatively poor cyclability of the $M_{Si}/A$=3.8 mg/cm$^2$ electrode. To further study the long-term stability of the $M_{Si}/A$=0.9 mg/cm$^2$ electrode, a rapid charge/discharge-rate was applied. The reasonable stability, coupled with high CE over 280 cycles (Figure 11f), can be credited to the synergistic effect between the high-capacity Si particles and the interconnected MX-C network; the latter well accommodates the large volume change and efficiently wraps the Si nanoparticles. Such a synergistic effect is not confined to MX-C; indeed, any other viscous ink composed of concentrated, conductive MXene nanosheets should work as an efficient conductive binder. As a quick example, the nSi/MX-N anode delivers an initial capacity of 1602 mAh/g at 1.5 A/g and maintains 1106 mAh/g after 70 cycles (Figure 11f).

Performance of Gr-Si/MX-C anode

To further improve the electrode M/A, and thus C/A, microsized Gr-Si particles were used as active materials. GCD profiles (Figure 12a) of Gr-Si/MX-C electrodes with various compositions reveal typical curves for Si. The 1st CE in these electrodes is reasonably high (81~83%), suggesting the lithiation/delithiation processes are reversible. The rate performance suggests that 30 wt% MX-C is capable of maximizing the specific capacity at various current densities. In addition, increasing the MX-C $M_f$ gradually not only boosts the utilization of Gr-Si to the theoretical value ($C_{SP}$=~2,000 mAh/g), but will also dramatically improve the mechanical properties of the electrode. Thus, Gr-Si/MX-C electrodes, with $M_{GrSi}$/A ranging from 1.3 to 13 mg/cm$^2$, were fabricated at a constant composition (MX-C $M_f$=30 wt%). The 1st GCD profiles of these Gr-Si/MX-C electrodes are shown in Figure 12b, suggesting a high 1st CE (81~83%). The C/A values scale linearly with $M_{GrSi}$/A and give a specific capacity per Gr-Si (C/$M_{GrSi}$) as high as 1850 mAh/g. The cycling performance of these electrodes is also $M_{GrSi}$/A-dependent, being fairly stable in the $M_{GrSi}$/A=3.3 mg/cm$^2$ electrode (C/A=~5 mAh/cm$^2$, Figure 12c) while less stable in the $M_{GrSi}$/A=13 mg/cm$^2$ electrode. This sharp discrepancy can be majorly attributed to the non-infinite supply of Li as well as the possible disruption of the MX-C continuous network in the thick electrode. On the other hand, intact MX-C nanosheets are well preserved and uniformly cover the Gr-Si superstructures in the $M_{GrSi}$/A=3.3 mg/cm$^2$ electrode, as demonstrated in Figure 12d,e.

Comparison with published data

To demonstrate the advantage of high areal capacity Si/MXene composites for high-energy Li-ion batteries, the C/A described herein was compared to other reported Si/conductive-binder systems. The C/A of Si/MXene composites exceeds the literature results, which are generally lower than 4 mAh/cm$^2$ (Figure. 12f and Table 4).

**Table 4.** Literature comparison of the Si/conductive-binder systems. Other details such as electrode composition, mass loading and specific capacity are also included. For the M/A, we sorted out the values based on the total electrode mass (Si + conductive agent/binder, $M_{Total}$/A,) as well as on only the active material mass ($M_{Si}$/A). Specific capacity values are presented in the same manner (both C/$M_{Total}$ and C/$M_{Si}$).

| Conductive-binder | Electrode composition | Mass loading ($M_{total}$/A and $M_{Si}$/A) | Specific capacity (C/$M_{Total}$ and C/$M_{Si}$) | Max. areal capacity (C/A) | Ref. |
|---|---|---|---|---|---|
| Conductive-binder based Si anodes (nano Si) | | | | | |
| **MXene ink** | **Si : MXene = 70 : 30** | **Total: 5.43 mg cm$^{-2}$ (Si: 3.8 mg cm$^{-2}$)** | **2240 mAh g$^{-1}$ @ 0.05 C (Si: 3200 mAh g$^{-1}$)** | **12.2 mAh cm$^{-2}$** | **Invention** |
| RGO | Si : RGO : Carbon paper = 23 : 1 : 76 | NA | ~650 mAh g$^{-1}$ @ 100 mA g$^{-1}$ (Si: ~ 2800 mAh g-1) | NA | 8 |
| Self-assembled RGO | Si: RGO = 50 : 50 | Si/RGO: 0.3 ~ 0.5 mg cm$^{-2}$ | ~1680 mAh g$^{-1}$ @ 50 mA g$^{-1}$ (Si: ~ 3360 mAh g$^{-1}$) | ~0.9 mAh cm$^{-2}$ | 9 |
| RGO | Si : RGO = 40 : 60 | ~1 mg cm$^{-2}$ (Si: 0.4 mg cm$^{-2}$) | ~1750 mAh g$^{-1}$ @ 100 mA g$^{-1}$ (Si: ~4300 mAh g$^{-1}$) | ~ 1.8 mAh cm$^{-2}$ | 10 |
| PFFOMB | Si : PFFOMB = 66.6 : 33.3 | 0.45 mg cm$^{-2}$ (~0.3 mg cm$^{-2}$) | 1665 mAh/g @ 0.1 C (Si: 2500 mAh g$^{-1}$) | 0.8 mAh cm$^{-2}$ | 11 |
| PEEM | Si : PEEM = 66.6 : 33.3 | 0.33 mg cm$^{-2}$ (Si: 0.22 mg cm$^2$) | 2475 mAh g$^{-1}$ (Si: 3750 mAh g$^{-1}$) | 0.8 mAh cm$^{-2}$ | 12 |
| PANi | Si : PANi = 75 : 25 | 0.4 ~ 0.53 mg cm$^{-2}$ (Si 0.3~0.4 mg cm$^{-2}$) | 1875 mAh/g @ 0.3 A g$^{-1}$ (Si: 2500 mAh g$^{-1}$) | 1 mAh cm$^{-2}$ | 13 |
| PFP-PEG co-polymer | Si : Co-polymer = 90 : 10 | ~ 0.7 mg cm$^{-2}$ (Si: 0.6 mg cm$^{-2}$) | ~1750 mAh g$^{-1}$ @ 1/25 C (Si: 1575 mAh g$^{-1}$) | ~ 1 mAh cm$^{-2}$ | 14 |
| Liquid-PAN (LPAN) | Si . Graphene: LPAN = 61 : 5 : 33 | ~ 1 mg cm$^{-2}$ (Si: 0.62 mg cm$^{-2}$) | ~1250 mAh g$^{-1}$ @ 500 mA g$^{-1}$ | ~ 1.2 mAh cm$^{-2}$ | 15 |

(continued)

| Conductive-binder | Electrode composition | Mass loading ($M_{total}$/A and $M_{Si}$/A) | Specific capacity (C/$M_{Total}$ and C/$M_{Si}$) | Max. areal capacity (C/A) | Ref. |
|---|---|---|---|---|---|
| Conductive-binder based Si anodes (nano Si) | | | | | |
| **MXene ink** | **Si : MXene = 70 : 30** | **Total: 5.43 mg cm$^{-2}$ (Si: 3.8 mg cm$^{-2}$)** | **2240 mAh g$^{-1}$ @ 0.05 C (Si: 3200 mAh g$^{-1}$)** | **12.2 mAh cm$^{-2}$** | **Invention** |
| PEFM | Si : PEFM = 66 : 33 | 0.5 mg cm$^{-2}$ (Si: 0.3 mg cm$^{-2}$) | 2475 mAh g$^{-1}$ @ 1/25 C (Si: 3750 mAh g$^{-1}$) | 1.2 mAh cm$^{-2}$ | [16] |
| PPQ | Si : PPQ = 70 : 30 | ~0.8 mg cm$^{-2}$ (Si: 0.55 mg cm$^{-2}$) | 2290 mAh/g @ 0.028 C (Si: 3271 mAh g$^{-1}$) | 1.8 mAh cm$^{-2}$ | [17] |
| Biopolymer lignin | Si : Lignin = 50 : 50 | ~2.8 mg cm$^{-2}$ (Si: 1.4 mg cm$^{-2}$) | ~800 mAh g$^{-1}$ @ 180 mA/g (Si: ~1600 mAh g$^{-1}$) | ~ 2.2 mAh cm$^{-2}$ | [18] |
| CNT and PEDOT:PSS | Si : CNT/PEDOT = 57 : 43 | 2 mg cm$^{-2}$ (Si: 1 mg cm$^{-2}$) | 1100 mAh g$^{-1}$ @ 0.2 A g$^{-1}$ (Si: 2180 mAh g$^{-1}$) | 2.2 mAh cm$^{-2}$ | [19] |
| PPyE | Si : PPyE = 66.6 : 33.3 | 2 mg cm$^{-2}$ (Si: 1.34 mg cm$^{-2}$) | 1243 mAh g$^{-1}$ @ 0.2 mA cm$^{-2}$ (Si: 1866 mAh g$^{-1}$) | 2.5 mAh cm$^{-2}$ | [20] |
| PANI | Si: PANI = 75 : 25 | 0.8 ~ 1.2 m g cm$^{-2}$ (Si: 0.6-0.9 mg cm$^{-2}$) | ~2440 mAh g$^{-1}$ @ 200 mA g$^{-1}$ (Si: ~3250 mAh g$^{-1}$) | 3 mAh cm$^{-2}$ | [21] |
| PEDOT:PSS | Si :PEDOT/PSS = 80 : 20 | 1.5 mg cm$^{-2}$ (Si: 1.2 mg cm$^{-2}$) | 2200 mAh g$^{-1}$ @ 0.5 A g$^{-1}$ (Si: 2750 mAh g$^{-1}$) | 3.3 mAh cm$^{-2}$ | [22] |
| PAA/PANI IPN | Si PAA/PANI IPN = 60 : 40 | 1.6 mg cm$^{-2}$ (Si: 1 mg cm$^{-2}$) | 2250 mAh g$^{-1}$ @ 0.1 C (Si: 3750 mAh g$^{-1}$) | 3.8 mAh cm$^{-2}$ | [23] |
| PPy | Si : PPy = 66 : 33 | ~2 mg cm$^{-2}$ (Si: 1.3 mg cm$^{-2}$) | ~2000 mAh g$^{-1}$ @ 0.1 C (Si: ~3000 mAh g$^{-1}$) | ~ 4 mAh cm$^{-2}$ | [24] |
| Conductive binder-Si/carbon composite active material | | | | | |
| **MXene ink** | **Gr-Si : MXene = 70 : 30** | **Total: 18.6 mg cm$^{-2}$ (Si: 13 mg cm$^{-2}$)** | **1250 mAh g$^{-1}$ @ 0.05 C (Gr-Si : 1791 mAh g$^{-1}$)** | **23.3 mAh cm$^{-2}$** | **Invention** |
| PEM | Si-alloy : CB PEM = 80 : 15 : 5 | ~4 mg cm$^{-2}$ | ~700 mAh g$^{-1}$ @ 1 C | 3 mAh cm$^{-2}$ | [25] |
| PPy | Si : Graphite : PPy = 20 : 70 : 10 | ~3.9 mg cm$^{-2}$ | ~800 mAh g$^{-1}$ @ 0.1 C | ~3 mAh cm$^{-2}$ | [26] |
| PPyMAA | Si : Graphite : PPyMAA = 10 : 80 : 10 | ~ 4 mg cm$^{-2}$ | 580 mAh g$^{-1}$ @ 0.1 C | ~ 2.4 mAh cm$^{-2}$ | [27] |

The C/A of reported Si/conductive-binder systems is typically limited by the $M_{Active}$/A (<2 mg/cm$^2$). Even with a high $M_{Active}$/A (~4 mg/cm$^2$), graphite-Si/conductive-binder electrodes display a much lower C/A than the results presented here due to the excessive graphite content in the electrodes. The ultrahigh C/A of the Si/MXene electrodes can be attributed to the advanced electrode architecture; 1) the viscous nature of the MXene aqueous ink enables the formation of thick composite electrodes (thus high $M_{Acitve}/A$) using a simple/scalable manufacturing process; 2) The high aspect ratio and metallic conductivity of MXene nanosheets endow the composite electrodes with mechanical robustness, high strength and excellent conductivity, facilitating fast electron transport; 3) the interconnected MXene scaffold efficiently accommodates the volume change and stress induced by the Si lithiation/delithiation, and boosts the utilization of active materials.

It should be noted that producing high $M_{Active}/A$ electrodes is of technological significance; it not only delivers a higher C/A to the electrode, but also decreases the mass portion of inactive components, such as current collector (Cu foil for anode side) and separator. Consequently, the cell-level performance of the anode, which includes the mass of Cu foil ($M_{Cu\text{-}foil}/A=9$ mg/cm$^2$), electrode and half of the separator ($M_{Separator}/A=2$ mg/cm$^2$), can be improved significantly (Figure 12g). Taking this into consideration, the true performance of the electrodes of the invention were calculated along with other reported Si/conductive-binder systems according to:

$$C/M_{Total} = \frac{C/A}{\dfrac{M_{Active}}{A} + \dfrac{M_{C-binder}}{A} + \dfrac{M_{Cu-foil}}{A} + \dfrac{0.5M_{separator}}{A}} , \qquad (3)$$

The $C/M_{Total}$ was plotted *versus* the corresponding $M_{Active}/A$, as shown in Figure 12h. This comparison clearly suggests that the electrodes of the invention exhibit much higher specific capacities on the cell level, highlighting the advantages of MXene viscous inks over other conductive binders. For example, the nSi/MX-C electrode showcases a $C/M_{Tolal}=790$ mAh/g at $M_{Si}/A=3.8$ mg/cm$^2$, while the Gr-Si electrode demonstrates 815 mAh/g at $M_{GrSi}/A=13$ mg/cm$^2$. Importantly, results presented herein are quite close to the theoretical limit (dashed lines in Figure 12h) for all samples, indicating that almost full utilization of Si active materials has been reached at the highest $M_{Acrive}/A$ electrode of the invention. Moreover, the shape of the Gr-Si/MX-C electrode is instructive; the theoretical curve (blue dashed line) nearly saturates at high $M_{GrSi}/A$ >14 mg/cm$^2$. In other words, even if increase the electrode thickness was further, the $C/M_{Total}$ of the Gr-Si/MX-C anode will only increase marginally. This means that the electrode architecture has allowed one to reach the absolute maximum $C/M_{Total}$ possible for the Gr-Si material used.

In summary, the efficient utilization of 2D nanosheets of MXene, TMDs, graphene or transition metal oxides, or combinations thereof, as a new class of conductive binder for high volume-change Si electrodes is of fundamental importance to the electrochemical energy storage field. The interconnected network of these nanosheets not only provides sufficient electrical conductivity and free space for accommodating the volume change issue, but also resolves the mechanical instability of Si. Therefore, the combination of a viscous ink of 2D nanosheets (of either MXene, TMDs, graphene, transition metal oxides or combinations thereof) and high-capacity Si demonstrated here offers a powerful technique to construct advanced nanostructures with exceptional performance. Of equal importance is that the formation of these high-mass-loading Si/(MXene, graphene, TMDs, or transition metal oxides, or combinations thereof) electrodes can be achieved by means of a commercially-compatible, slurry-casting technique, which is highly scalable and low cost, allowing for large-area production of high-performance, Si-based electrodes for advanced batteries. Also, considering that more than 30 MXenes are already reported, with more predicted to exist, there is certainly much room for further improving the electrochemical performance of such electrodes by tuning the electrical, mechanical and physicochemical properties of this exciting 2D MXene family.

In addition to unprecedented conductivity enhancement, these spontaneously formed segregated networks dramatically increase mechanical robustness, promoting stability and allowing the production of extremely thick electrodes. In addition, wrapping the active materials particles in a flexible, porous 2-dimensional membrane facilitates stable, repeatable, expansion/contraction of the lithium-storing material without impeding lithium diffusion. In addition, these membranes should keep silicon fragments localized even after pulverization, further promoting stability.

Compared to electrodes prepared from traditional mixtures of active material and polymer-binder and conductive-additive, the spontaneously formed segregated networks of the composite of the claimed invention make an electrode comprising said composite having very high mechanical toughness. This toughness allows very thick electrodes to be made because it prevents crack formation during charging/discharging (mud-cracking effect) and improves stability. These thick electrodes store more Li ions and yield higher energy density.

Compared to electrodes prepared from traditional mixtures of active material and polymer-binder and conductive-additive, these networks make the electrode have very high conductivity. This conductivity allows the electrode to reach its theoretical Li storage capacity (Li ions per unit mass). The very high conductivity facilitates this maximisation of capacity, even for very thick electrodes.

The segregated network of the composite of the claimed invention spontaneously forms a 2D membrane which acts as a scaffold to hold the active material particles in place.

All the above can be achieved using nanosheets of conducting materials at a concentration of 20-30 wt%. The dispersion of the nanosheets in the composite provides the architecture for an electrode. The nanosheets of conducting material spontaneously self-organise or self-arrange themselves around the particulate active materials to form the membranes which are locally 2-dimensional but extend throughout the electrode wrapping all particles. The 2D membranes wrap around the particles and fill space within the electrode architecture. The membranes can be considered to be a fractal object with fractal dimensions of between 2 and 3. Without any polymeric binders or carbon black in the composite, more active material can be added to the composite to reach the theoretical maximum capacity when used in thick electrodes.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

References

8. Tao, H.C., Xiong, L.Y., Zhu, S.C., Yang, X.L. & Zhang, L.L. Flexible binder-free reduced graphene oxide wrapped Si/carbon fibers paper anode for high-performance lithium ion batteries. Int J Hydrogen Energ 41, 21268 (2016).

9. Tang, H. et al. Self-assembly of Si/honeycomb reduced graphene oxide composite film as a binder-free and flexible anode for Li-ion batteries. J Mater Chem A 2, 5834 (2014).

10. Luo, Z.P., Xiao, Q.Z., Lei, G.T., Li, Z.H. & Tang, C.J. Si nanoparticles/graphene composite membrane for high performance silicon anode in lithium ion batteries. Carbon 98, 373 (2016).

11. Liu, G. et al. Polymers with Tailored Electronic Structure for High Capacity Lithium Battery Electrodes. Adv Mater 23, 4679 (2011).

12. Wu, M.Y. et al. Toward an Ideal Polymer Binder Design for High-Capacity Battery Anodes. J Am Chem Soc 135, 12048 (2013).

13. Wu, H. et al. Stable Li-ion battery anodes by in-situ polymerization of conducting hydrogel to conformally coat silicon nanoparticles. Nat Commun 4, 1943 (2013).

14. Yuca, N. et al. Highly efficient poly(fluorene phenylene) copolymer as a new class of binder for high-capacity silicon anode in lithium-ion batteries. Int J Energy Res. 42, 1148 (2018).

15. Mi, H.W. et al. Three-dimensional network structure of silicon-graphene-polyaniline composites as high performance anodes for Lithium-ion batteries. Electrochim Acta 190, 1032-1040 (2016).

16. Wu, M.Y. et al. Manipulating the polarity of conductive polymer binders for Si-based anodes in lithium-ion batteries. J Mater Chem A 3, 3651 (2015).

17. Kim, S.M. et al. Poly(phenanthrenequinone) as a conductive binder for nano-sized silicon negative electrodes. Energ Environ Sci 8, 1538 (2015).

18. Chen, T., Zhang, Q.L., Xu, J.G., Pan, J. & Cheng, Y.T. Binder-free lithium ion battery electrodes made of silicon and pyrolized lignin. RSC Adv 6, 29308 (2016).

19. Park, S.J. et al. Side-Chain Conducting and Phase-Separated Polymeric Binders for High-Performance Silicon Anodes in Lithium-Ion Batteries. J Am Chem Soc 137, 2565 (2015).

20. Yu, X.H. et al. Three-Dimensional Conductive Gel Network as an Effective Binder for High-Performance Si Electrodes in Lithium-Ion Batteries. ACS Appl Mater Inter 7, 15961 (2015).

21. Feng, M.Y., Tian, J.H., Xie, H.M., Kang, Y.L. & Shan, Z.Q. Nano-silicon/polyaniline composites with an enhanced reversible capacity as anode materials for lithium ion batteries. J Solid State Electr 19, 1773 (2015).

22. Higgins, T.M. et al. A Commercial Conducting Polymer as Both Binder and Conductive Additive for Silicon Nanoparticle-Based Lithium-Ion Battery Negative Electrodes. ACS Nano 10, 3702 (2016).

23. Chen, Z. et al. A Three-Dimensionally Interconnected Carbon Nanotube-Conducting Polymer Hydrogel Network for High-Performance Flexible Battery Electrodes. Adv Energy Mater 4, 1400207 (2014).

24. Xun, S.D., Xiang, B., Minor, A., Battaglia, V. & Liu, G. Conductive Polymer and Silicon Composite Secondary Particles for a High Area-Loading Negative Electrode. J Electrochem Soc 160, A1380 (2013).

25. Zhao, H. et al. Conductive Polymer Binder-Enabled SiO-SnxCoyCz Anode for High-Energy Lithium-Ion Batteries. Acs Appl Mater Inter 8, 13373 (2016).

26. Zhao, H., Du, A., Ling, M., Battaglia, V. & Liu, G. Conductive polymer binder for nanosilicon/graphite composite electrode in lithium-ion batteries towards a practical application. Electrochim Acta 209, 159 (2016).

27. Zhao, H. et al. Conductive Polymer Binder for High-Tap-Density Nanosilicon Material for Lithium-Ion Battery Negative Electrode Application. Nano Lett 15, 7927 (2015)

**Claims**

1.  A composite for use as an electrode, the composition comprising a homogenously distributed and spontaneously formed segregated network of nanosheets of conducting materials, or a combination thereof, and a particulate active material, in which no additional polymeric binder or conductive-additive are required.

2.  The composite of Claim 1, wherein the composite comprises from 5 wt% to 50 wt% of the homogenously distributed spontaneously formed segregated network of nanosheets of conducting materials, or a combination thereof.

3.  The composite of Claim 1 or Claim 2, wherein the homogenously distributed spontaneously formed segregated network of nanosheets of conducting materials are dispersed in either an organic solvent alone or organic solvent water stabilised with 0.2 wt% to 10 wt% surfactant.

4.  The composite of any one of the preceding claims, in which the nanosheets of conducting material are selected from TMDs, transmission metal oxides, graphene or MXenes having a general formula of $M_{n+1}X_nT_x$, where T is an (optional) functional group, or other layered materials, or a combination thereof.

5.  The composite of Claim 4, in which the MXenes are selected from Ti2C, $(Ti_{0.5},Nb_{0.5})_2C$, $V_2C$, $Nb_2C$, $Mo_2C$, $Ti_3C_2$, $Ti_3CN$, $Zr_3C_2$, $Hf_3C_2$; $Ti_4N_3$, $Nb_4C_3$, $Ta_4C_3$; $Mo_2TiC_2$, $Cr_2TiC_2$; and $Mo_2Ti_2C_3$.

6.  The composite of Claim 4 or Claim 5, in which the TMD has the formula $MX_n$, where M may be selected from the group comprising Ti, Zr, Hf, V, Nb, Ta, Cr, Mn, Mo, W, Tc, Re, Ni, Pd, Pt, Fe and Ru; X may be selected from the group comprising O, S, Se, and Te; and $1 \leq n \leq 3$.

7.  The composite of Claim 6, in which the TMD is selected from Molybdenum disulphide ($MoS_2$), Niobium diselenide ($NbSe_2$), Vanadium telluride ($VTe_2$), Tungsten disulphide ($WS_2$), Tantalum disulphide ($TaS_2$) and Platinum telluride ($PtTe_2$).

8.  The composite of any one of Claims 4 to 7, in which the other layered compounds are selected from Antimony telluride ($Sb_2Te_3$) and Bismuth telluride ($Bi_2Te_3$).

9.  The composite of any one of the preceding claims, wherein the particulate active material is selected from micron-sized silicon powder, lithium, sulphur, graphene, graphite, and lithium nickel manganese cobalt oxide (NMC, $LiNi_xMn_yCo_zO_2$ where x+y+z = 1), lithium cobalt oxide (LCO), lithium nickel cobalt aluminium oxide (NCA), lithium iron phosphate (LFP), lithium titanium oxide (LTO) alloying materials (Si, Ge, Sn, P etc.), chalcogenides (S, Se, Te), metal halides (F, Cl, Br, I), and any other suitable battery material.

10. The composite of any one of the preceding claims, wherein the composite comprises from 50 wt% to 95 wt% of the particulate active material.

11. The composite of any one of the preceding claims for use as an electrode in an energy storage device such as a battery, a supercapacitor, an electrocatalyst, or a fuel cell.

12. A positive electrode or a negative electrode comprising the composite of Claim 1; wherein the nanosheets of conducting materials optionally have a mass fraction (Mf) in the electrode of 5 - 50 wt%.

13. The positive electrode or the negative electrode of Claim 12, wherein the positive and negative electrodes each have a thickness of between 200 $\mu$m and 500 $\mu$m.

14. A non-rechargeable battery or a rechargeable battery comprising an anode material, a cathode material, and an electrolyte, wherein the anode material and the cathode material comprise the composite of Claim 1.

15. A method for producing a positive or negative electrode, the method comprising mixing aqueous dispersions of nanosheets of conducting materials, or a combination thereof, with a particulate active material powder to form a homogenously distributed spontaneously formed segregated network, and depositing the homogenously distributed spontaneously formed segregated network onto a substrate to yield a robust, flexible electrode.

Figure 1

Figure 2

Figure 3

Figure 4

Figure 5

Figure 6

Figure 7

Figure 8

Figure 9

Figure 10

Figure 11

Figure 12

Europäisches
Patentamt

European
Patent Office

Office européen
des brevets

# EUROPEAN SEARCH REPORT

**Application Number**

EP 19 15 1029

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 106 450 336 A (NAT ENG RES OF ADVANCED ENERGY STORAGE MAT) 22 February 2017 (2017-02-22) | 1,3,4,6, 7,9-12, 15 | INV. H01M4/13 H01M4/139 |
| Y | * example 2 * | 8,14 | H01M4/62 H01M4/36 |
| X | TAO HUACHAO ET AL: "Flexible binder-free reduced graphene oxide wrapped Si/carbon fibers paper anode for high-performance lithium ion batteries", INTERNATIONAL JOURNAL OF HYDROGEN ENERGY, ELSEVIER SCIENCE PUBLISHERS B.V., BARKING, GB, vol. 41, no. 46, 20 August 2016 (2016-08-20), pages 21268-21277, XP029813844, ISSN: 0360-3199, DOI: 10.1016/J.IJHYDENE.2016.07.220 * Experimental; page 21273, left-hand column * | 1-4, 9-12,15 | H01M4/134 H01M4/1395 ADD. H01M4/02 H01M10/052 |
| X | WO 2017/083573 A1 (UNIV CORNELL [US]) 18 May 2017 (2017-05-18) * paragraph [0147]; figure 4; example 1 * | 1-4, 9-13,15 | |
| X | CN 108 899 479 A (QINGDAO INSTITUTE OF BIOENERGY AND BIOPROCESS TECH CHINESE ACADEMY OF) 27 November 2018 (2018-11-27) | 1,3-5, 9-12 | |
| Y | * example 1 * | 14 | |
| Y | EP 2 615 057 A1 (UNIV RUTGERS [US]) 17 July 2013 (2013-07-17) * example 7 * | 8 | |

**TECHNICAL FIELDS SEARCHED (IPC)**

H01M

The present search report has been drawn up for all claims

| Place of search | Date of completion of the search | Examiner |
|---|---|---|
| Munich | 29 April 2019 | Meini, Stefano |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 15 1029

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2019

| Patent document cited in search report | | Publication date | Patent family member(s) | | Publication date |
|---|---|---|---|---|---|
| CN 106450336 | A | 22-02-2017 | NONE | | |
| WO 2017083573 | A1 | 18-05-2017 | US | 2019044143 A1 | 07-02-2019 |
| | | | WO | 2017083573 A1 | 18-05-2017 |
| CN 108899479 | A | 27-11-2018 | NONE | | |
| EP 2615057 | A1 | 17-07-2013 | EP | 2152628 A2 | 17-02-2010 |
| | | | EP | 2615057 A1 | 17-07-2013 |
| | | | JP | 2010518560 A | 27-05-2010 |
| | | | US | 2008199772 A1 | 21-08-2008 |
| | | | US | 2013302682 A1 | 14-11-2013 |
| | | | US | 2015207140 A1 | 23-07-2015 |
| | | | WO | 2008095197 A2 | 07-08-2008 |

EPO FORM P0459

For more details about this annex : see Official Journal of the European Patent Office, No. 12/82

**REFERENCES CITED IN THE DESCRIPTION**

**Non-patent literature cited in the description**

- **TAO, H.C. ; XIONG, L.Y. ; ZHU, S.C. ; YANG, X.L. ; ZHANG, L.L.** Flexible binder-free reduced graphene oxide wrapped Si/carbon fibers paper anode for high-performance lithium ion batteries. *Int J Hydrogen Energ,* 2016, vol. 41, 21268
- **TANG, H. et al.** Self-assembly of Si/honeycomb reduced graphene oxide composite film as a binder-free and flexible anode for Li-ion batteries. *J Mater Chem A,* 2014, vol. 2, 5834
- **LUO, Z.P. ; XIAO, Q.Z. ; LEI, G.T. ; LI, Z.H. ; TANG, C.J.** Si nanoparticles/graphene composite membrane for high performance silicon anode in lithium ion batteries. *Carbon,* 2016, vol. 98, 373
- **LIU, G. et al.** Polymers with Tailored Electronic Structure for High Capacity Lithium Battery Electrodes. *Adv Mater,* 2011, vol. 23, 4679
- **WU, M.Y. et al.** Toward an Ideal Polymer Binder Design for High-Capacity Battery Anodes. *J Am Chem Soc,* 2013, vol. 135, 12048
- **WU, H. et al.** Stable Li-ion battery anodes by in-situ polymerization of conducting hydrogel to conformally coat silicon nanoparticles. *Nat Commun,* 2013, vol. 4, 1943
- **YUCA, N. et al.** Highly efficient poly(fluorene phenylene) copolymer as a new class of binder for high-capacity silicon anode in lithium-ion batteries. *Int J Energy Res.,* 2018, vol. 42, 1148
- **MI, H.W. et al.** Three-dimensional network structure of silicon-graphene-polyaniline composites as high performance anodes for Lithium-ion batteries. *Electrochim Acta,* 2016, vol. 190, 1032-1040
- **WU, M.Y. et al.** Manipulating the polarity of conductive polymer binders for Si-based anodes in lithium-ion batteries. *J Mater Chem A,* 2015, vol. 3, 3651
- **KIM, S.M. et al.** Poly(phenanthrenequinone) as a conductive binder for nano-sized silicon negative electrodes. *Energ Environ Sci,* 2015, vol. 8, 1538
- **CHEN, T. ; ZHANG, Q.L ; XU, J.G. ; PAN, J. ; CHENG, Y.T.** Binder-free lithium ion battery electrodes made of silicon and pyrolized lignin. *RSC Adv,* 2016, vol. 6, 29308

- **PARK, S.J. et al.** Side-Chain Conducting and Phase-Separated Polymeric Binders for High-Performance Silicon Anodes in Lithium-Ion Batteries. *J Am Chem Soc,* 2015, vol. 137, 2565
- **YU, X.H. et al.** Three-Dimensional Conductive Gel Network as an Effective Binder for High-Performance Si Electrodes in Lithium-Ion Batteries. *ACS Appl Mater Inter,* 2015, vol. 7, 15961
- **FENG, M.Y. ; TIAN, J.H. ; XIE, H.M. ; KANG, Y.L. ; SHAN, Z.Q.** Nano-silicon/polyaniline composites with an enhanced reversible capacity as anode materials for lithium ion batteries. *J Solid State Electr,* 2015, vol. 19, 1773
- **HIGGINS, T.M. et al.** A Commercial Conducting Polymer as Both Binder and Conductive Additive for Silicon Nanoparticle-Based Lithium-Ion Battery Negative Electrodes. *ACS Nano,* 2016, vol. 10, 3702
- **CHEN, Z. et al.** A Three-Dimensionally Interconnected Carbon Nanotube-Conducting Polymer Hydrogel Network for High-Performance Flexible Battery Electrodes. *Adv Energy Mater,* 2014, vol. 4, 1400207
- **XUN, S.D. ; XIANG, B. ; MINOR, A. ; BATTAGLIA, V. ; LIU, G.** Conductive Polymer and Silicon Composite Secondary Particles for a High Area-Loading Negative Electrode. *J Electrochem Soc,* 2013, vol. 160, A1380
- **ZHAO, H. et al.** Conductive Polymer Binder-Enabled SiO-SnxCoyCz Anode for High-Energy Lithium-Ion Batteries. *Acs Appl Mater Inter,* 2016, vol. 8, 13373
- **ZHAO, H. ; DU, A. ; LING, M. ; BATTAGLIA, V. ; LIU, G.** Conductive polymer binder for nanosilicon/graphite composite electrode in lithium-ion batteries towards a practical application. *Electrochim Acta,* 2016, vol. 209, 159
- **ZHAO, H. et al.** Conductive Polymer Binder for High-Tap-Density Nanosilicon Material for Lithium-Ion Battery Negative Electrode Application. *Nano Lett,* 2015, vol. 15, 7927